Europäisches Patentamt

European Patent Office

Office européen des brevets

(19)

(11) **EP 0 920 610 B1**

(12) **EUROPÄISCHE PATENTSCHRIFT**

(45) Veröffentlichungstag und Bekanntmachung des Hinweises auf die Patenterteilung:
**02.06.2004  Patentblatt 2004/23**

(51) Int Cl.⁷: **G01L 1/22**, G01R 27/14, B60N 2/00

(21) Anmeldenummer: **98922593.3**

(22) Anmeldetag: **13.03.1998**

(86) Internationale Anmeldenummer:
**PCT/DE1998/000741**

(87) Internationale Veröffentlichungsnummer:
**WO 1999/000651 (07.01.1999 Gazette 1999/01)**

(54) **SIGNALVERARBEITUNGSSCHALTUNG FÜR ZUSTANDSSIGNALE EINES RESISTIVEN FOLIENDRUCKSENSORS**

SIGNAL PROCESSING CIRCUIT FOR STATUS SIGNALS OF A RESISTIVE-FILM PRESSURE SENSOR

CIRCUIT DE TRAITEMENT DE SIGNAUX POUR SIGNAUX D'ETAT D'UN CAPTEUR DE PRESSION A FILM RESISTIF

(84) Benannte Vertragsstaaten:
**DE FR GB**

(30) Priorität: **26.06.1997  DE 19727193**

(43) Veröffentlichungstag der Anmeldung:
**09.06.1999  Patentblatt 1999/23**

(73) Patentinhaber: **ROBERT BOSCH GMBH**
**70442 Stuttgart (DE)**

(72) Erfinder:
• **MATTES, Bernhard**
  **D-74343 Sachsenheim (DE)**

• **NITSCHKE, Werner**
  **D-71254 Ditzingen (DE)**
• **DROBNY, Wolfgang**
  **D-74072 Heilbronn (DE)**
• **KARL, Otto**
  **D-71229 Leonberg-Höfingen (DE)**
• **HANUSSEK, Adrian**
  **D-75415 Mühlacker-Lienzingen (DE)**
• **SCHÄDLER, Peter**
  **D-71636 Ludwigsburg (DE)**

(56) Entgegenhaltungen:
  **DE-C- 4 237 072**          **US-A- 4 301 403**

## Beschreibung

Die Erfindung betrifft eine Signalverarbeitungsschaltung für die Verarbeitung von Signalen über den Zustand mindestens eines resistiven Foliendrucksensors, der aus einer FSR-Folie mit einer parallel zum veränderlichen Folienwiderstand liegenden Diode D besteht, wobei mittels einer ersten und zweiten, jeweils an einer ersten und zweiten Seite des Foliendrucksensors anschaltbaren Spannungsquelle Ströme unterschiedlicher Flußrichtung durch den Foliendrucksensor geleitet werden, bei denen die Diode im Foliendrucksensor entweder in Durchlaßrichtung oder in Sperrichtung gepolt ist, und deren vom resistiven Zustand des Foliendrucksensors abhängige Stärke zu entsprechend unterschiedlichen, an einem Bezugswiderstand abfallenden Meßspannungspegeln führt, die als Meßsignal erfaßbar sind ("FSR" bedeutet Force Sensing Resistor).

Stand der Technik

Eine Signalverarbeitungsschaltung dieser Art ist aus einer Firmendruckschrift der Firma Interlink Electronics Europe, Echternach, LU bekannt (s. Erklärungen zum FSR™-SBE Sensor Interface).

Nachstehend werden anhand der Figuren 4 und 5 Eigenschaften und Probleme einer aus der obigen Druckschrift bekannten Grundschaltung einer Signalverarbeitungsschaltung erläutert.

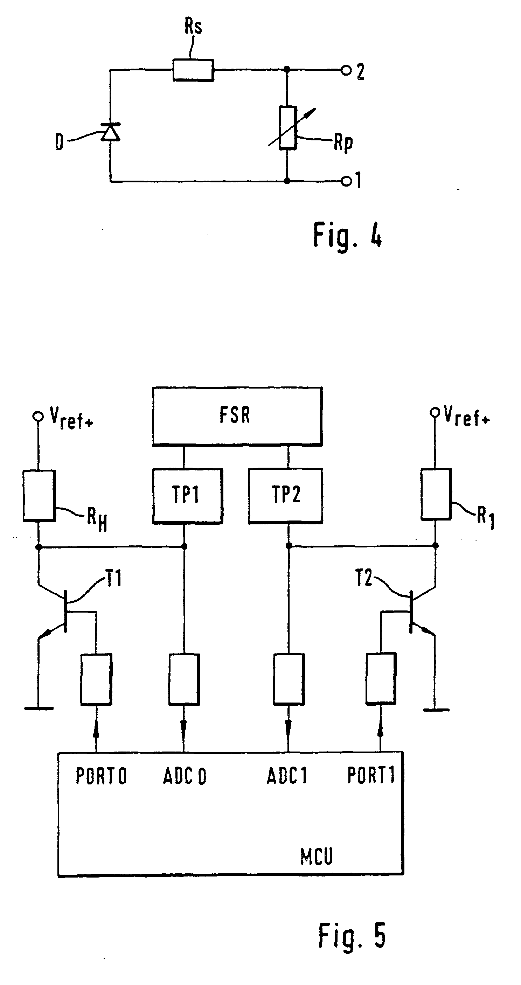

In Fig. 4, die ein vereinfachtes elektrisches Ersatzschaltbild eines FSR-Sensors zeigt, liegt ein druckveränderlicher Folienwiderstand Rp zwischen einem ersten und zweiten Anschluß 1, 2 parallel zu einer Reihenschaltung einer Diode D mit einem Serienwiderstand Rs. Wenn im druckbeaufschlagten Zustand der FSR-Folie die Diode D in Sperrichtung gepolt ist, läßt sich ihr Folienwiderstand Rp je nach Größe und Bauart derselben in einem Bereich zwischen 1 kΩ und etwa 40 kΩ bestimmen. Dagegen liegt im nicht druckbeaufschlagten Zustand der FSR-Folie der Wert dieses Widerstands Rp in einem Bereich über 60 kΩ. Wenn die Diode D in Sperrichtung gepolt ist, läßt sich auch ein Leitungskurzschluß der FSR-Folie erkennen, nämlich, wenn der Widerstandswert des Widerstands Rp zwischen den Eingangsanschlüssen 1 und 2 unterhalb von etwa 0,5 kΩ liegt.

Bei in Durchlaßrichtung gepolter Diode D läßt sich eine Leitungsunterbrechung erkennen, da dann der Hauptteil des Stroms durch den Widerstand Rs fließt, dessen Widerstandswert zwischen 200 Ω und 5 kΩ liegt.

Die obigen Erläuterungen der Fig. 4 machen deutlich, daß sich eine FSR-Folie mit solchen Eigenschaften hervorragend für die Anwendung in einer Sitzbelegungserkennungsvorrichtung in Kraftfahrzeugen eignet, wenn eine solche FSR-Folie z.B. zwischen dem Sitzbezug und einer Gummihaarmatte des Sitzes angeordnet ist (vgl. die DE-PS-42 37 072).

Die oben erwähnte Druckschrift der Fa. Interlink Electronics Europe enthält eine Signalverarbeitungsschaltung, wie sie die Fig. 5 zeigt, die zur Auswertung der oben erwähnten FSR-Folienzustände mit Hilfe einer Mikrocontrollereinheit MCU geeignet ist. Durch zwei Ports $Port_0$, $Port_1$ der MCU sind ein erster und zweiter externer Transistor $T_1$, $T_2$ ein- und ausschaltbar. Diese Transistoren $T_1$, $T_2$ bilden zusammen mit Referenzspannungsquellen $V_{Ref+}$ und Kollektorwiderständen $R_H$, $R_L$ jeweils eine schaltbare Spannungsquelle, die mit Hilfe eines Tiefpaßfilters TP1, TP2 zur Störbegrenzung Ströme unterschiedlicher Richtung durch den FSR-Foliendrucksensor FSR fließen lassen, so daß je nach Polrichtung der im FSR-Foliendrucksensor FSR enthaltenen Diode in Durchlaß- oder Sperrichtung und je nach seinem Zustand unterschiedliche Ströme durch den FSR-Foliendrucksensor FSR fließen, die in Form von Spannungssignalen an Analog/Digital-Wandlereingängen $ADC_0$, $ADC_1$ der Mikrocontrollereinheit MCU abfragbar sind. Das Abfragen der Sensorzustände führt die MCU programmgesteuert in sequentiellen Phasenabschnitten durch. Bei der oben beschriebenen, anhand der Fig. 5 dargestellten bekannten Signalverarbeitungsschaltung können die Schaltzeitpunkte der externen Transistoren $T_1$, $T_2$ nicht exakt mit den Schaltzeitpunkten der abtastenden Eingänge $ADC_0$ und $ADC_1$ der MCU in Übereinstimmung gebracht werden. Die bekannte Schaltung benötigt auch nachteiligerweise zur Zustandserkennung einer FSR-Folie zwei Analog/Digital-Wandlereingangskanäle $ADC_0$ und $ADC_1$, sowie zwei unabhängige Ports $Port_0$ und $Port_1$ der MCU. Da die diskreten externen Transistoren $T_1$ und $T_2$ kein "matching"-Verhalten haben, müssen aufgrund auftretender Toleranzen die Zustände der FSR-Folie durch eine aufwendige Differenzmessung bestimmt werden. Pro auszuwertender FSR-Folie werden nachteiligerweise zwei der ohnehin immer knappen Analog/Digital-Wandlerkanäle der Mikrocontrollereinheit MCU benötigt.

Darstellung der Erfindung

Es ist somit Aufgabe der Erfindung, eine Signalverarbeitungsschaltung anzugeben, bei der die Bauelementeanzahl und die Anzahl der notwendigen A/D-Kanäle reduziert ist, und die ohne aufwendige Differenzmessung eine hochgenaue Auswertung der Zustände eines resistiven Foliendrucksensors, der aus einer FSR-Folie mit einer parallel zu einem druckveränderlichen Folienwiderstand liegende Diode besteht, gestattet.

Eine die obige Aufgabe lösende Signalverarbeitungsschaltung ist im Anspruch 1 angegeben.

Damit läßt sich vorteilhafterweise mit nur einer schaltbaren hochgenauen Prüfspannungsquelle an den Bezugswiderstand das zur Weiterverarbeitung, insbesondere zur A/D-Wandlung geeignete Meßsignal erzeugen und die Zustände der FSR-Folie auswerten.

Zu diesen Zuständen gehören nicht nur der druckbeaufschlagte Zustand und der nicht druckbeaufschlagte Zustand, sondern auch ein Kurzschlußfehler der FSR-Folie.

Durch Umkehrung der Stromflußrichtung, d.h. Abschaltung der hochgenauen Prüfspannungsquelle (erste Spannungsquelle) und Anschaltung der zweiten Spannungsquelle fließt der Strom durch den Bezugswiderstand und die FSR-Folie so, daß die Diode in Durchlaßrichtung gepolt ist. Dadurch läßt sich eine fehlerhafte Leitungsunterbrechung erfassen. Die letztgenannte Prüfung ist weniger genau als die Prüfung des BELEGT/NICHT BELEGT-Zustandes der FSR-Folie, da die Diode in Durchlaßrichtung gepolt ist, weswegen die normale "Spannungsquelle" ausreichend ist.

Außerdem lassen sich fehlerhafte Nebenschlüsse und Kurzschlüsse der FSR-Folie zu einer externen Spannung (z.B. $U_{bat}$) erfassen, wenn beide Spannungsquellen abgeschaltet sind und der Stromkreis zu beiden Seiten der FSR-Folie über den Bezugswiderstand nach Masse geschaltet ist.

Eine bevorzugte Anwendung der Signalverarbeitungsschaltung zur Verarbeitung der von einer FSR-Folie gelieferten Signale ist die Sitzbelegungserkennung in einem Kraftfahrzeug.

Eine Verbesserung der Meßschaltung ist dadurch möglich, daß beide schaltbaren Spannungsquellen durch jeweils eine hochgenaue Prüfspannungsquelle gebildet sind, die jeweils in einem anwenderspezifischen integrierten Schaltkreis implementiert sind.

Wenn die Zustände mehrerer jeweils mit einer FSR-Folie versehener Sitzbelegungsmatten im Kraftfahrzeug separat zu erfassen sind, werden mehrere gleiche Stromkreise, die jeweils eine FSR-Folie in Reihenschaltung mit einem Bezugswiderstand aufweisen, zwischen den beiden schaltbaren Prüfspannungsquellen parallel geschaltet. Der Mikrocontroller kann in diesem Fall mehrere Analog/Digital-Wandlereingänge aufweisen, denen die an den Bezugswiderständen jeweils abfallenden Meßsignale getrennt eingegeben werden.

Weitere Merkmale und Vorteile der erfindungsgemäßen Signalverarbeitungsschaltung werden nachfolgend anhand bevorzugter in der Zeichnung dargestellter Ausführungsbeispiele beschrieben, beispielhaft angewendet in einer mit einer FSR-Folie arbeitenden Sitzbelegungserkennungsvorrichtung in einem Kraftfahrzeug.

Zeichnung

Fig. 1 zeigt ein erstes grundlegendes Ausführungsbeispiel einer Signalverarbeitungsschaltung zur Auswertung des Sitzbelegungszustandes in einem Kraftfahrzeug;

Fig. 2 zeigt eine Weiterbildung der in Fig. 1 gezeigten Signalverarbeitungsschaltung, die eine Meßbereichserweiterung mittels einer zusätzlich zuschaltbaren Stromquelle hat;

Fig.3 zeigt ein erfindungsgemäßes Ausführungsbeispiel einer Signalverarbeitungsschaltung zur separaten Sitzbelegungserkennung im Falle mehrerer FSR-Folienmatten;

Fig. 4 zeigt das bereits beschriebene Ersatzschaltbild eines bekannten FSR-Foliensensors; und

Fig. 5 zeigt die bereits beschriebene bekannte Signalverarbeitungsschaltung zur Auswertung der Zustände eines FSR-Foliensensors.

Beschreibung von Ausführungsbeispielen

Zunächst muß deutlich gesagt werden, daß die erfindungsgemäße Signalverarbeitungsschaltung nicht auf die bevorzugte Anwendung für die Sitzbelegungserkennung im Kraftfahrzeug beschränkt ist, wie sie als Beispiel den nachfolgenden Ausführungsbeispielen zugrundeliegt.

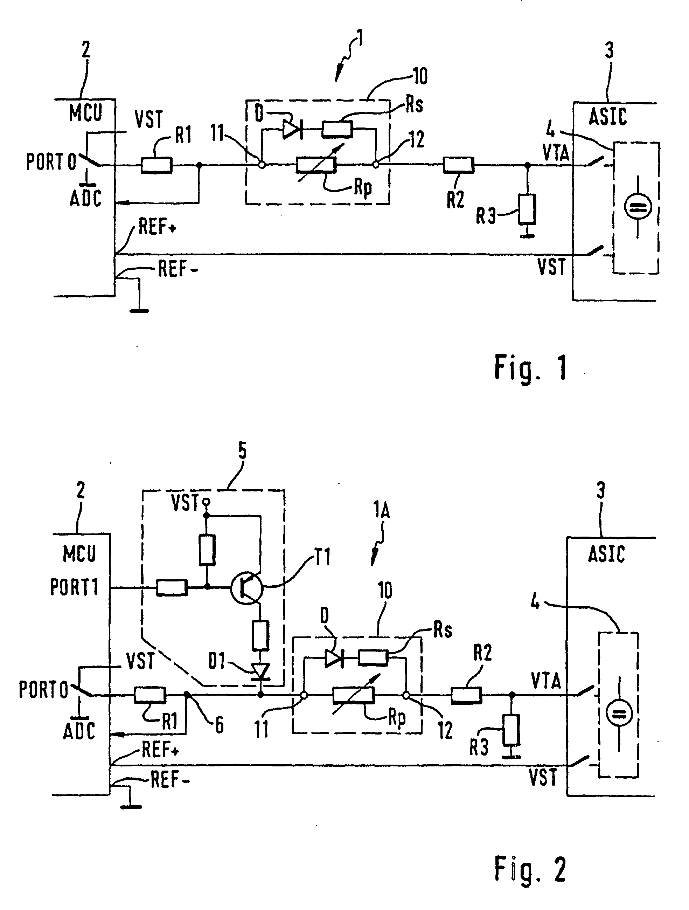

In der in Fig. 1 schematisch dargestellten Schaltungsanordnung enthält ein mit der Bezugszahl 1 bezeichnetes erstes Ausführungsbeispiel gemäß der Erfindung eine FSR-Folie 10 in Reihe mit einer Signalverarbeitungsschaltung in einem Stromkreis zwischen einer Mikrocontrollereinheit (MCU) 2 und einer hochgenauen schaltbaren Gleichspannungsquelle 4 in einem anwenderspezifischen integrierten Schaltkreis (ASIC) 3. Der Stromkreis der Signalverarbeitungsschaltung 1 enthält den Bezugswiderstand $R_1$, von dem ein Ende mit einem als $Port_0$ bezeichneten Schaltausgang der MCU 2 und dessen anderes Ende zum einen mit einer Anschlußseite 11 der FSR-Folie 10 und weiterhin mit einem Analog/Digital-Wandlereingang ADC der MCU 2 verbunden ist. Die andere Anschlußseite 12 der FSR-Folie 10 liegt über einen Serienwiderstand $R_2$ an einem Anschluß VTA der hochgenauen schaltbaren Gleich- oder Prüfspannungsquelle 4, die in dem ASIC 3 enthalten ist. Über diesem Anschlußpunkt VTA ist außerdem ein weiterer Widerstand

$R_3$ nach Masse gelegt. Der Widerstand $R_3$ schaltet die rechte Seite gegen Masse, wenn die Spannung am Ausgang VTA ausgeschaltet ist. Der Ausgang VTA ist dann hochohmig. Bei ASICs, bei denen VTA auch. gegen Masse geschaltet werden kann, kann der Widerstand $R_3$ entfallen.

Ein weiterer Schaltausgang VST des ASIC 3 ist die einheitliche Gleichspannungsversorgung, die zu einem Eingang $Ref_+$ der MCU 2 geführt ist. $Ref_+$ ist die positive Referenzspannung des Analog/Digital-Wandlers der MCU 2. Ref- ist die negative Referenzspannung des Analog/Digital-Wandlers der MCU 2 und mit Masse verbunden. Durch die Nutzung der genauen im ASIC 3 enthaltenen Meßmittel, d.h. der hochgenauen Prüfspannungsquelle 4, die eine Basisfunktion des ASIC 3 ist, kann eine aufwendige Differenzmessung entfallen. Die Schaltausgänge VTA und VST sind durch die gemeinsame "bandgap" und das "matching" identisch. Der Offset beträgt im ASIC 3 ca. 4 mV. Ein niederwertiges Bit (1 LSB) wird in dem System mit 22 mV abgebildet. "Bandgap" bedeutet Referenz- und Bezugsspannungsquelle für VTA und VST, "matching" bedeutet Gleichlaufverhalten von VTA und VST.

Nachstehend wird die Funktionsweise der Signalverarbeitungsschaltung in Fig. 1 beschrieben. Aufgabe der Schaltung ist die sichere Erkennung der Zustände "BELEGT/NICHT BELEGT" der FSR-Folie 10 sowie diverser Fehlerfälle. Dies geschieht, wie erwähnt, durch die Auswertung des veränderlichen Widerstandswerts des Widerstands Rp der FSR-Folie 10.

Zur Ausführung der Messungen wird Gleichstrom in zwei unterschiedlichen Flußrichtungen durch den Stromkreis vom ASIC 3 zur MCU 2 und umgekehrt gespeist. Fließt der Strom vom Ausgang VTA der schaltbaren hochgenauen Prüfspannungsquelle 4 zum $Port_0$ bei ausgeschalteter Spannungsquelle VST der MCU 2 ($Port_0$ ist dann nach Masse geschaltet), so ist die Diode D der FSR-Folie 10 in Sperrichtung vorgespannt. Dabei können sich für den Widerstandswert Rp folgende Werte und davon abhängig folgende Zustände der FSR-Folie ergeben.

Diode D in Sperrichtung vorgespannt:

| | |
|---|---|
| Rp < 0,5 kΩ | Kurzschlußfehler |
| Rp = 0,5 kΩ ... 1,0 kΩ | Graubereich |
| Rp = 1,0 kΩ ... 40 kΩ | FSR-Folie druckbeaufschlagt - Sitz belegt |
| Rp = 40 kΩ ... 60 kΩ | Graubereich |
| Rp > 60 kΩ | FSR-Folie nicht druckbeaufschlagt - Sitz nicht belegt. |

Fließt der Gleichstrom bei ausgeschalteter hochgenauer Prüfspannungsquelle des ASIC 3 von der Spannungsquelle VST der MCU 2 von links nach rechts über den Widerstand $R_3$ nach Masse, so ist die Diode D in Durchlaßrichtung vorgespannt. Für die ungenaue Prüfung "Diode in Durchlaßrichtung" wird der normale Schaltausgang VST am $Port_0$ der MCU 2 verwendet.

Diode D in Durchlaßrichtung vorgespannt:

| | |
|---|---|
| Rp = 1,5 kΩ ... 40 kΩ | Graubereich |
| Rp > 40 kΩ | Unterbrechung, Fehler |
| 200 Ω < Rs < 5 kΩ | keine Leitungsunterbrechung |

Die Erfassung der oben bezeichneten verschiedenen Zustände der FSR-Folie geschieht durch die Auswertung der am Bezugswiderstand $R_1$ abfallenden Spannung mittels des in der MCU 2 enthaltenen Analog/Digital-Wandlers. Dieser bekommt die Spannung am Ausgang VST des ASIC 3 als positive Referenzspannung $Ref_+$. Es ist zu erwähnen, daß im ASIC 3 VST und VTA von der gleichen Spannungsreferenz abgeleitet sind. Die Spannungsdifferenz ist minimal und hat keine Auswirkungen auf die Genauigkeit der Messung. Wenn die hochgenaue Prüfspannungsquelle VTA des ASIC 3 eingeschaltet ist, ist das Spannungspotential am VTA-Ausgang gleich der stabilisierten Spannung VST.

Bevorzugt ist der Widerstandswert $R_1$ in der Größenordnung des zu messenden, veränderlichen Widerstands Rp der FSR-Folie 10 gewählt. Der Widerstand $R_2$ ist dagegen niederohmig. Der Widerstand $R_3$ schaltet die rechte Seite gegen Masse, wenn VTA ausgeschaltet ist; der Ausgang VTA ist dann hochohmig. Wie schon erwähnt, kann der Widerstand $R_3$ entfallen, wenn VTA auch gegen Masse geschaltet werden kann.

Nebenschlüsse oder Kurzschlüsse zu einer externen Spannung, insbesondere zur Batteriespannung $U_{Bat}$ des Kraftfahrzeugs werden erkannt, wenn VTA ausgeschaltet und der Schaltausgang am $Port_0$ der MCU 2 gegen Masse geschaltet ist.

In einer Versuchsschaltung wurden folgende Widerstandswerte der Signalverarbeitungsschaltung gewählt:

$$R_1 = 10 \text{ k}\Omega; R_2, R_3 = 500 \text{ } \Omega.$$

**4**

Eine sichere Erkennung der Zustände der FSR-Folie wurde damit erreicht.

Bei dem in Fig. 2 gezeigten zweiten Ausführungsbeispiel 1A der erfindungsgemäßen Signalverarbeitungsschaltung, deren Funktion weitgehend identisch mit der oben beschriebenen und in Fig. 1 gezeigten Signalverarbeitungsschaltung ist, dient eine zusätzliche, schaltbare Gleichstromquelle 5 zur Meßbereichserweiterung, falls der normale Schaltausgang am $Port_0$ der MCU 2 nicht den erforderlichen Prüfstrom liefern kann. Die zusätzliche schaltbare Gleichstromquelle 5 ist in herkömmlicher Weise realisiert und speist den Prüfstrom in die rechte Seite des Bezugswiderstands $R_1$ ein, wo dieser mit der linken Anschlußseite 11 der FSR-Folie 10 und mit dem Eingang ADC der MCU 2 verbunden ist. Mit einem weiteren $Port_1$ wird die zusätzliche Prüfstromquelle 5 geschaltet. Die sonstigen Merkmale, Eigenschaften und Funktion der in Fig. 2 gezeigten Schaltung stimmen mit den in Fig. 1 gezeigten Schaltungsmerkmalen und -funktionen überein. Es wird jedoch ein zusätzlicher Port der MCU 2 benutzt.

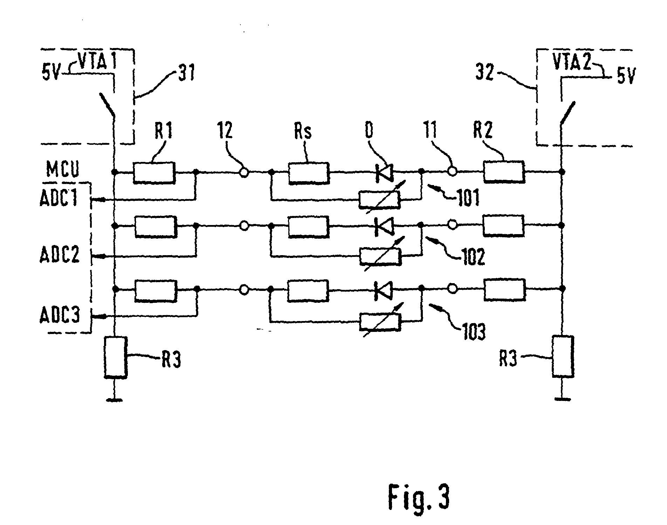

In dem in Fig. 3 gezeigten dritten Ausführungsbeispiel der erfindungsgemäßen Signalverarbeitungsschaltung sind mehrere FSR-Folien 101, 102, 103 für eine separate Sitzbelegungserkennung mehrerer Sitze im Kraftfahrzeug jeweils in der in Fig. 1 gezeigten Grundschaltung in einem gleichen Stromkreis parallel zwischen zwei gleichen ASICs 31 und 32, die jeweils eine schaltbare Spannungsquelle $VTA_1$ und $VTA_2$ haben, eingeschaltet. Abgriffe von den Bezugswiderständen $R_1$ sind jeweils getrennt zu Analog/Digital-Wandlereingängen $ADC_1$, $ADC_2$, $ADC_3$ einer MCU geführt und können dort getrennt ausgewertet werden. Ansonsten ist das Meßprinzip das gleiche wie es oben beschrieben wurde.

**Patentansprüche**

1. Signalverarbeitungsschaltung, die Signale über den Zustand mindestens eines resistiven Foliendrucksensors verarbeitet, der aus einer FSR-Folie mit einer parallel zu einem veränderlichen Folienwiderstand ($R_p$) liegenden Diode gebildet ist, wobei mittels einer ersten und zweiten, jeweils an einer ersten und zweiten Anschlussseite (11, 12) des Foliendrucksensors (10) anschaltbaren Spannungsquelle Ströme unterschiedlicher Flussrichtung durch den Foliendrucksensor geleitet werden, bei denen die Diode (D) entweder in Durchlassrichtung oder in Sperrrichtung gepolt ist, und deren vom jeweiligen Widerstandswert des veränderlichen Folienwiderstands ($R_p$) abhängige Stärke zu entsprechend verschiedenen an einem Bezugswiderstand ($R_1$) abfallenden Messspannungspegeln führt, die als Messsignal erfassbar sind, wobei der Bezugswiderstand ($R_1$) in Reihe zwischen der ersten Seite (11) der FSR-Folie (10) und der zweiten schaltbaren Spannungsquelle liegt,
   mindestens die erste der beiden schaltbaren Spannungsquellen eine hochgenaue Prüfspannungsquelle (4) ist, und zur Messung des BELEGT/NICHT BELEGT.Zustandes sowie zur Prüfung eines Kurzschlussfehlers in der FSR-Folie der Stromkreis von der ersten angeschalteten Prüfspannungsquelle über die FSR-Folie und den Bezugswiderstand ($R_1$) bei abgeschalteter zweiter Spannungsquelle nach Erde geschaltet ist, wobei die Diode (D) im fehlerfreien Fall in Sperrrichtung gepolt ist, wobei die eine hochgenaue Prüfspannungsquelle in einem anwenderspezifischen integrierten Schaltkreis ($ASIC_3$) implementiert und die zweite Spannungsquelle durch einen Port ($Port_0$) eines Mikrocontrollers (2) realisiert ist, der Mikrocontroller (2) einen Analog/Digital-Wandlereingang (ADC) hat, dem das am Bezugswiderstand ($R_1$) abfallende Messsignal zur Analog/Digital-Umsetzung eingegeben wird, und
   die Referenzspannung ($Ref_+$) des Analog/Digital-Wandlers mit der Spannung der Prüfspannungsquelle im anwenderspezifischen integrierten Schaltkreis (ASIC) identisch ist.

2. Signalverarbeitungsschaltung nach Anspruch 1, **dadurch gekennzeichnet, dass** der Stromkreis zur Erfassung einer fehlerhaften Leitungsunterbrechung von der angeschalteten zweiten Spannungsquelle über den Bezugswiderstand ($R_1$) und die FSR-Folie (10) nach Erde geht oder geschaltet ist, wobei die erste Spannungsquelle abgeschaltet und die Diode (D) in Durchlassrichtung gepolt ist.

3. Signalverarbeitungsschaltung nach Anspruch 1 oder 2, **dadurch gekennzeichnet, dass** zur Erfassung von fehlerhaften Nebenschlüssen oder Kurzschlüssen zu einer externen Spannung beide Spannungsquellen abgeschaltet sind und der Stromkreis zu beiden Seiten der FSR-Folie über den Bezugswiderstand ($R_1$) nach Masse geschaltet ist.

4. Signalverarbeitungsschaltung nach einem der Ansprüche 1 bis 3, **dadurch gekennzeichnet, dass** beide schaltbaren Spannungsquellen durch eine jeweils in einem anwenderspezifischen integrierten Schaltkreis ($ASIC_1$, $ASIC_2$) implementierte hochgenaue Prüfspannungsquelle ($VTA_1$, $VTA_2$) gebildet sind.

5. Signalverarbeitungsschaltung nach Anspruch 4, **dadurch gekennzeichnet, dass** mehrere Stromkreise, die jeweils eine FSR-Folie in Reihenschaltung mit einem Bezugswiderstand (R1) aufweisen, zwischen den beiden schaltbaren Prüfspannungsquellen parallel geschaltet sind, und dass der Mikrocontroller (2) mehrere Analog/Digital-Wandlereingänge ($ADC_1$, $ADC_2$, ...) aufweist, denen die an den Bezugswiderständen ($R_1$) jeweils abfallenden Messsignale separat eingegeben werden.

**6.** Signalverarbeitungsschaltung nach einem der vorangehenden Ansprüche, **dadurch gekennzeichnet, dass** zusätzlich ein im Vergleich mit dem Bezugswiderstand ($R_1$) niederohmiger zweiter Widerstand ($R_2$) seriell in dem Stromkreis auf der dem Bezugswiderstand ($R_1$) gegenüberliegenden Anschlussseite (12) der FSR-Folie (10) vorgesehen ist.

**7.** Signalverarbeitungsschaltung nach einem der vorangehenden Ansprüche, **dadurch gekennzeichnet, dass** der Widerstandswert des Bezugswiderstands ($R_1$) in der Größenordnung des Folienwiderstands ($R_p$) der mit dem Bezugswiderstand in Reihe liegenden FSR-Folie (10) gewählt ist.

**8.** Signalverarbeitungsschaltung nach einem der Ansprüche 1 bis 7, **dadurch gekennzeichnet, dass** zusätzlich eine schaltbare Stromquelle (5) mit dem Verbindungspunkt zwischen dem Bezugswiderstand ($R_1$) und der FSR-Folie (10) verbunden ist, wobei diese Stromquelle (5) von einem zweiten Port ($Port_1$) des Mikrocontrollers (MCU) an- und abschaltbar ist.

**9.** Signalverarbeitungsschaltung nach einem der vorangehenden Ansprüche, **dadurch gekennzeichnet, dass** jede schaltbare Spannungsquelle von ihrem nominalen Spannungspotential (VTA, VST) nach Masse umschaltbar ist.

## Claims

**1.** Signal processing circuit which processes signals relating to the state of at least one resistive film pressure sensor which is formed from an FSR film with a diode connected parallel with a variable film resistance ($R_P$), with currents being passed through the film pressure sensor in a different flow direction by means of a first and a second voltage source which can respectively be connected to a first and a second connection side (11, 12) of the film pressure sensor (10), for which currents the diode (D) is biased either in the forward direction or in the reverse direction, and whose level, which is dependent on the respective resistance value of the variable film resistance ($R_p$) leads to correspondingly different measurement voltage levels being dropped across a reference resistor ($R_1$), and in which case these measurement voltage levels can be detected as a measurement signal, with the reference resistor ($R_1$) being connected in series between the first side (11) of the FSR film (10) and the second switchable voltage source,
with at least the first of the two switchable voltage sources being a high-precision test voltage source (4), and the circuit from the first connected test voltage source being connected to earth via the FSR film and the reference resistor ($R_1$) when the second voltage source is switched off, in order to measure the in use/not in use state and in order to test for a short-circuit fault in the FSR film, with the diode (D) being biased in the reverse direction if no fault is present, with one high-precision test voltage source being implemented in an application specific integrated circuit ($ASIC_3$) and the second voltage source being implemented by means of a port ($Port_0$) of a microcontroller (2) which has an analogue/digital converter input (ADC) to which the measurement signal which is dropped across the reference resistor ($R_1$) is input for analogue/digital conversion, and
with the reference voltage ($Ref_+$) of the analogue/digital converter being identical to the voltage of the test voltage source in the application specific integrated circuit (ASIC).

**2.** Signal processing circuit according to Claim 1, **characterized in that** the circuit for detection of a faulty line discontinuity is passed or connected from the connected second voltage source via the reference resistor ($R_1$) and the FSR film (10) to earth, with the first voltage source being switched off and the diode (D) being biased in the forward direction.

**3.** Signal processing circuit according to Claim 1 or 2, **characterized in that**, in order to detect faulty secondary paths or short circuits to an external voltage, both voltage sources are switched off, and the circuit is connected to earth on both sides of the FSR film via the reference resistor ($R_1$).

**4.** Signal processing circuit according to one of Claims 1 to 3, **characterized in that** both switchable voltage sources are formed by a respective high-precision test voltage source ($VTA_1$, $VTA_2$) which is implemented in an application specific integrated circuit ($ASIC_1$, $ASIC_2$).

5. Signal processing circuit according to Claim 4, **characterized in that** two or more circuits, which each have an FSR film connected in series with a reference resistor ($R_1$), are connected in parallel between the two switchable test voltage sources, and **in that** the microcontroller (2) has two or more analogue/digital converter inputs ($ADC_1$, $ADC_2$, ...), at which the measurement signals which are in each case dropped across the reference resistor ($R_1$) are input separately.

6. Signal processing circuit according to one of the preceding claims, **characterized in that** a second resistor ($R_2$), whose resistance is less than that of the reference resistor ($R_1$), is additionally provided in series in the circuit, on that connection side (12) of the FSR film (10) which is opposite a reference resistor ($R_1$).

7. Signal processing circuit according to one of the preceding claims, **characterized in that** the resistance value of the reference resistor ($R_1$) is chosen to be of the same order of magnitude as the film resistance ($R_P$) of the FSR film (10) which is connected in series with the reference resistor.

8. Signal processing circuit according to one of Claims 1 to 7, **characterized in that** a switchable current source (5) is additionally connected to the junction point between the reference resistor ($R_1$) and the FSR film (10), in which case the current source (5) can be connected to and disconnected from a second port ($Port_1$) of the microcontroller (MCU).

9. Signal processing circuit according to one of the preceding claims, **characterized in that** each switchable voltage source can be switched from its nominal voltage potential (VTA, VST) to earth.

**Revendications**

1. Circuit de traitement de signaux qui traite des signaux relatifs à l'état d'au moins un capteur de pression à film résistif formé à partir d'un film FSR avec une diode parallèle à une résistance de film modifiable ($R_p$), dans lequel des courants de différentes directions d'écoulement sont guidés par le capteur de pression à film à l'aide d'une première et d'une deuxième source de tension pouvant être connectées respectivement à une première et une deuxième borne de connexion (11, 12) du capteur de pression à film, la diode (D) étant polarisée dans le cas de ces courants soit dans le sens de conduction soit dans le sens de non conduction, alors que les puissances de ces courants en fonction de la valeur de résistance correspondante de la résistance de film modifiable ($R_p$) conduisent à autant de niveaux de tension de mesure différents rencontrés pour une résistance de référence ($R_1$), lesquels niveaux de tension de mesure peuvent être détectés en tant que signal de mesure, dans lequel

   - la résistance de référence ($R_1$) est montée en série entre le premier côté (11) du film FSR (10) et la deuxième source de tension commutable, au moins la première des deux sources de tension commutables est une source de tension d'essai (4) de très haute précision, et
   - le circuit électrique de la première source de tension de contrôle enclenchée est mis à la terre via le film FSR et la résistance de référence ($R_1$) lorsque la deuxième source de tension est coupée afin de mesurer l'état OCCUPE/NON OCCUPE et de contrôler une erreur de court-circuit dans le film FSR, la diode (D) étant polarisée dans le sens de blocage en cas de fonctionnement impeccable,
   - l'une des sources de tension d'essai de haute précision est implémentée dans un circuit de commutation intégré ($ASIC_3$) spécifique à l'utilisateur et la deuxième source de tension est réalisée par un port (porto) d'un microcontrôleur (2), le microcontrôleur (2) comporte une entrée de convertisseur analogique-numérique (ADC) auquel est envoyé le signal de mesure pour la conversion analogique/numérique rencontré pour la résistance de référence ($R_1$), et
   - la tension de référence ($ref_+$) du convertisseur analogique-numérique est identique à la tension de la source de tension d'essai dans un circuit de commutation intégré spécifique à l'utilisateur (ASIC).

2. Circuit de traitement de signaux selon la revendication 1,
   **caractérisé en ce que**
   le circuit de commutation pour la détection d'une coupure de ligne incorrecte de la deuxième source de tension raccordée va ou est commuté à la terre via la résistance de référence ($R_1$) et le film FSR (10), dans lequel la première source de tension est coupée et la diode (D) est polarisée dans le sens de conduction.

3. Circuit de traitement de signaux selon la revendication 1 ou 2,

**caractérisé en ce que**
les deux sources de tension sont coupées pour détecter des circuits dérivés défectueux ou des courts-circuits vers une tension externe et **en ce que** le circuit électrique vers les deux côtés du film FSR est mis à la masse via la résistance de référence ($R_1$).

4. Circuit de traitement de signaux selon l'une quelconque des revendications 1 à 3,
   **caractérisé en ce que**
   les deux sources de tension commutables sont formées par une source de tension d'essai ($VTA_1$, $VTA_2$) de très haute précision mise en place à chaque fois dans un circuit de commutation ($ASIC_1$, $ASIC_2$) intégré spécifique à l'utilisateur.

5. Circuit de traitement de signaux selon la revendication 4,
   **caractérisé en ce que**
   plusieurs circuits électriques comportant chacun un film FSR monté en série avec une résistance de référence ($R_1$) sont commutés en parallèle entre les deux sources de tension d'essai commutables, et le microcontrôleur (2) comporte plusieurs entrées de convertisseur analogique-numérique ($ADC_1$, $ADC_2$,...) auxquelles sont envoyés séparément les signaux de mesure rencontrés à chaque fois pour les résistances de référence ($R_1$).

6. Circuit de traitement de signaux selon l'une quelconque des revendications précédentes,
   **caractérisé en ce qu'**
   une deuxième résistance ($R_2$) d'impédance plus faible que la résistance de référence ($R_1$) est ajoutée en série dans le circuit électrique sur la borne de connexion (12) du film FSR (10) opposée à la résistance de référence ($R_1$).

7. Circuit de traitement de signaux selon l'une quelconque des revendications précédentes,
   **caractérisé en ce que**
   la valeur de la résistance de référence ($R_1$) est sélectionnée proportionnellement à la résistance ($R_p$) du film FSR (10) monté en série avec la résistance de référence.

8. Circuit de traitement de signaux selon l'une quelconque des revendications 1 à 7,
   **caractérisé en ce qu'**
   une source de tension (5) commutable est reliée en plus au point de transfert entre la résistance de référence ($R_1$) et le film FSR (10), dans lequel cette source de tension (5) peut être connectée à et déconnectée d'un deuxième port (port1) du microcontrôleur (MCU).

9. Circuit de traitement de signaux selon l'une quelconque des revendications précédentes,
   **caractérisé en ce que**
   chaque source de tension commutable peut être commutée à la masse à partir de son potentiel de tension nominal (VTA, VST).

Fig. 1

Fig. 2

Fig. 3

Fig. 4

Fig. 5